# EUROPEAN PATENT APPLICATION

(11) **EP 4 273 198 A1**
(43) Date of publication of application: **08.11.2023**
(21) Application number: 21914140.5
(22) Date of filing: 23.12.2021
(51) Int. Cl.: C09D 5/03, C09D 167/00, C09D 133/04

(54) **LEVELING POWDER COATING COMPOSITION AND COATING LAYER THEREOF**

(30) Priority: 29.12.2020 CN 202011599584
(71) Applicant: Tiger New Surface Materials (Suzhou) Co., Ltd., Suzhou Jiangsu 215400 (CN)
(72) Inventor: FU, Guangming, Suzhou, Jiangsu 215400 (CN); DAI, Tianhe, Suzhou, Jiangsu 215400 (CN); KAI, Weihua, Suzhou, Jiangsu 215400 (CN); LUO, Biao, Suzhou, Jiangsu 215400 (CN)
(74) Representative: Kurig, Thomas
(86) International application number: PCT/CN2021/140853
(87) International publication number: WO 2022/143403

(57) **Abstract**

Disclosed is a leveling powder coating composition and a coating layer thereof. The leveling powder coating composition comprises a polyester resin having a high acid value and an acrylic resin carrying an epoxy group, which are used for performing a crosslinking curing reaction. The polyester resin having a high acid value has a viscosity range of 500-2000 mPa.s at a temperature of 200°C, and the acid value thereof is not less than 65 mgKOH/g. In the present invention, crosslinking curing is completed under the conditions in which the curing temperature is not higher than 140°C and the curing time does not exceed 10 minutes. Meanwhile, a curing coating film having a leveling effect is obtained, in which the PCI leveling class of the curing coating film is not less than class 6.

## Description

This application claims priority to the Chinese patent application number "2020115995840" filed with the Patent Office of China Intellectual Property Office on December 29th, 2020, and its title is " A smooth powder coating composition and its coating". All contents of the patent application are combined for reference into this application.

### TECHNICAL FIELD

The present invention pertains to the field of powder coating, and specifically to a smooth powder coating composition and its coating.

### BACKGROUND

It has been a technical problem in the powder coating industry to achieve smooth coating on wood-based substrates or polymeric substrates. This is due to the fact that wood-based substrates or polymeric substrates are heat-sensitive and require cross-linking at lower temperatures and shorter curing times, which can not give conventional powder coatings sufficient melt leveling time. As a result, the coating film usually cannot achieve good leveling effect, therefore, the existing low temperature curing powder coatings are made into a variety of sand grain coating effect.

Therefore, the applicant hopes to develop technical solutions to obtain smooth coating film effect on the basis of low temperature curing condition .

### SUMMARY

In view of this, the objective of the present invention is to provide a smooth powder coating composition and its coating, can finish cross-linking curing at a curing temperature which is not higher than 140°C and the curing time is not more than 10 minutes, and its coating while obtaining a PCI flow level of not less than 6 levels of flat effect curing coating film.

The technical solution of the present invention is as follows:
A smooth powder coating composition, it includes at least a high acid value polyester resin and an epoxy-functional acrylic resin for having crosslink curing reaction with the high acid value polyester resin, wherein the viscosity range of the high acid value polyester resin is from 500 to 2000 mPa.s at 200 °C and its acid value is not less than 65 mgKOH/g.

Preferably, the epoxy-functional acrylic resin is a GMA acrylic resin.

Preferably, the acid value of the high acid value polyester resin is from 70-90mgKOH/g.

Preferably, the viscosity of the epoxy-functional acrylic resin is not higher than 2000 mPa.s at 200°C.

Preferably, the epoxy equivalent weight (EEW) of the epoxy-functional acrylic acid resin is not higher than 600 g/eq.

Preferably, the weight ratio between the high acid value polyester resin and the epoxy-functional acrylic resin is 6:1-1:6.

Preferably, it includes 0.2-2wt% of a flatting agent, wherein preferably the flatting agent includes a carboxyl functional acrylic polymer, which preferably is provided for as adsorbate on a silica-based carrier.

Preferably, it includes 0.2-2wt% of a defoaminutesg agent, wherein preferably the defoaminutesg agent includes an amide modified phenol surfactant.

Preferably, it includes 0.2-2wt% of a dispersing agent, wherein preferably the dispersing agent includes a high molecular-weight copolymer with pigment-affine groups, which preferably is provided for as adsorbate on a silica-based carrier.

Preferably, a smooth coating obtained by spraying the above said smooth powder coating composition onto a substrate and following curing by heat.

Preferably, the substrate is a wood-based material or a polymeric material, wherein the curing temperature is not higher than 140°C and the curing time is not more than 10minutes.

GMA involved in this application is the abbreviation of Glycidyl methacylate, which means: glycidyl methacrylate; MDF is the abbreviation of Medium Density Fiberboard, which means: medium density fiberboard. Smooth involved in this application means that the PCI flow level of the curing coating film is not less than 6, preferably not less than 7, wherein the PCI flow level of this application specifically means that the flow level of the coating film to be tested is determinutesed by visual comparison with the PCI flow level control plate (0-10), which is the prevailing flow level determinutesation method in the industry.

It should also be noted that the acid value data involved in this application is based on the testing standard GB/T 2895-2008; the viscosity data involved in this application is based on the testing standard GB/T 22314-2008; the epoxy equivalent data involved in this application is based on the testing standard GB/T 4612-2008.

This application creatively selects polyester resin with high acid value and low viscosity and acrylic resin with epoxy group as the main raw material of powder coating composition, due to between the polyester resin with high acid value and the acrylic resin with epoxy group will have highly reactive cross-linking curing reaction, while resin raw material with the low viscosity in the process of melt cross-linking curing reaction will have excellent melt leveling performance, so that the overall powder coating composition system in the curing temperature is not higher than 140 °C and curing time is not more than 10 minutes to finish the cross-linking curing conditions, while obtaining a PCI leveling level of not less than 6 level of flat effect curing coating film.

### DESCRIPTION OF EMBODIMENTS

Embodiments of the present invention disclose a smooth powder coating composition, it includes at least a high acid value polyester resin and an epoxy-functional acrylic resin for having crosslink curing reaction with the high acid value polyester resin, wherein the viscosity range of the high acid value polyester resin is from 500 to 2000 mPa.s at 200 °C more preferably is from 500 to 1500 mPa.s and its acid value is not less than 65 mgKOH/g, more preferably is 70-90 mgKOH/g, further preferably is 75-85mgKOH/g; Preferably, the epoxy-functional acrylic resin is a GMA acrylic resin; Preferably, the viscosity of the epoxy-functional acrylic resin is not higher than 2000 mPa.s at 200°C, more preferably is 500-2000 mPa.s , further more preferably is 500-1500 mPa.s at 200°C; Preferably, the epoxy equivalent weight (EEW) of the epoxy-functional acrylic acid resin is not higher than 600 g/eq, more preferably is 300-550 g/eq,further more preferably is 350-500 g/eq, more further preferably is 400-450 g/eq.

Preferably, the weight ratio between the high acid value polyester resin and the epoxy-functional acrylic resin is 6:1-1:6, more preferably is 6:1-1:1, further more preferably is 3:1-3:2, more further preferably is 2.5:1-2:1, which is good for the rapid melt leveling and fast curing effects.

Preferably, the smooth powder coating composition includes 0.2-2wt% of a flatting agent, 0.2-2wt% of a defoaminutesg agent and 0.2-2wt% of a dispersing agent; wherein preferably the flatting agent includes a carboxyl functional acrylic polymer, which preferably is provided for as adsorbate on a silica-based carrier, such as RESIFLOW P-64F from ESTRON or other flatting agent with similar effect; wherein preferably the defoaminutesg agent includes an amide modified phenol surfactant such as POWDERMATE 550DG from Troy or other defoaminutesg agent with similar effect; wherein preferably the dispersing agent includes a high molecular-weight copolymer with pigment-affine groups, which preferably is provided for as adsorbate on a silica-based carrier, such as BYK-3951P from BYK or other dispersing agent with similar effect. The smooth powder coating composition can also include a suitable weight of degassing agent or other additives, and can also add a certain weight of pigments and fillers according to actual needs.

In the embodiments of this invention, it is possible to select the weight of raw materials within the preferred parameters proposed in this application as the formulation of the smooth powder coating composition of this application, all can obtain basically similar technical effect. Through a large number of implementation application comparison combined with common knowledge and research and development experience, the applicant found that using the weight of raw materials outside the preferred parameters of this application as the coating formulation, the overall performance of the coating is significantly weaker than that of the embodiment within the preferred parameters of this application, but there are also certain positive technical effects.

It should also be noted that, according to the needs of practical application, the raw material of the ultra-low temperature curing matte powder coating composition proposed in this embodiment can also include various well-known curing agents and / or pigments and / or fillers and / or catalysts and / or other additives. Preferably, the curing agent can be any one or several of TGIC, hydroxyalkyl amide, isocyanate compound (including various isocyanate ester compounds, specifically including closed isocyanate, blocked isocyanate, latent isocyantes , urethdiones and other isocyanate compounds), dodecanedioic acid and sebacic acid, with its weight ratio can preferably be 0.05-6wt%, more preferably 0.5-3wt%; f.i. aluminutesum hydroxide and TiO₂ can be selected as pigments and / or fillers with its weight ratio can be 1-30wt% which can be routinely selected according to actual needs. It should be noted that in order to obtain better leveling effect, it is not recommended to add too much fillers, and it is most preferred to not to add fillers to the powder coating composition The catalyst can specifically adopt various well-known curing accelerators (including imidazole type, ammonium type and other types of curing accelerators), which can further improve the reaction activity. The weight proportion of the catalyst preferably can be 0.1-3wt%, more preferably 0.1-2wt%, even more preferably 0.3-1 wt%.

The above raw material formulations are prepared by well-known techniques to obtain the smooth powder coating composition, which usually include: weighing, premixing, melt extrusion, grinding, cyclone separation and other processes, but of course, other well-known preparation processes can be used to obtain the smooth powder coating composition of this embodiment, and the preparation process of this application is not particularly limited.

Embodiments of the present invention disclose a smooth coating obtained by spraying the above said smooth powder coating composition onto a substrate and following curing by heat. Preferably, the substrate is a wood-based material or a polymeric material, wherein the curing temperature is not higher than 140°C and the curing time is not more than 10minutes. Preferably, the thickness of the smooth coating of this embodiment can be specifically selected according to actual needs, and the recommended coating thickness range is 60-120µm (testing standards based on ISO 2360-2017).

In order to further verify the implementation effect of this application, in particular, the following multiple sets of embodiments were conducted in this application as formulation for smooth powder coating composition for specific test performance comparisons.

**Embodiment 1:** A smooth powder coating composition, comprises the raw material as shown in the following table 1:

**Table 1 Formulation of the smooth powder coating composition in embodiment 1**

| **Raw material** | **Parts by weight** | **Specification** |
|---|---|---|
| Polyester resin with high acid value and low viscosity | 600 | TM5013 from Zhejiang Chuanhua Tiansong |
| GMA acrylic acid resin | 365 | GMA1618 from Ningbo Nanhai Chemical |
| Flatting agent | 10 | RESIFLOW P-64F from ESTRON |
| Defoaminutesg agent | 10 | POWDERMATE 550DG from Troy |
| Dispersing agent | 10 | BYK-3951P from BYK |
| Degassing agent | 5 | OXYMELT A4 from Estron |
| Total | 1000 | / |

**Embodiment 2:** A smooth powder coating composition, comprises the raw material as shown in the following table 2:

**Table 2 Formulation of the smooth powder coating composition in embodiment 2**

| **Raw material** | **Parts by weight** | **Specification** |
|---|---|---|
| Polyester resin with high acid value and low viscosity | 650 | TM5013 from Zhejiang Chuanhua Tiansong |
| GMA acrylic acid resin | 315 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Total | 1000 | / |

**Embodiment 3:** A smooth powder coating composition, comprises the raw material as shown in the following table 3:

**Table 3 Formulation of the smooth powder coating composition in embodiment 3**

| **Raw material** | **Parts by weight** | **Specification** |
|---|---|---|
| Polyester resin with high acid value and low viscosity | 700 | TM5013 from Zhejiang Chuanhua Tiansong |
| GMA acrylic acid resin | 265 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Total | 1000 | / |

**Embodiment 4:** A smooth powder coating composition, comprises the raw material as shown in the following table 4:

**Table 4 Formulation of the smooth powder coating composition in embodiment 4**

| **Raw material** | **Parts by weight** | **Specification** |
|---|---|---|
| Polyester resin with high acid value and low viscosity | 500 | TM5013 from Zhejiang Chuanhua Tiansong |
| GMA acrylic acid resin | 465 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Total | 1000 | / |

**Embodiment 5:** A smooth powder coating composition, comprises the raw material as shown in the following table 5:

**Table 5 Formulation of the smooth powder coating composition in embodiment 5**

| **Raw material** | **Parts by weight** | **Specification** |
|---|---|---|
| Polyester resin with high acid value and low viscosity | 400 | TM5013 from Zhejiang Chuanhua Tiansong |
| GMA acrylic acid resin | 565 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Total | 1000 | / |

**Embodiment 6:** A smooth powder coating composition, comprises the raw material as shown in the following table 6:

**Table 6 Formulation of the smooth powder coating composition in embodiment 6**

| **Raw material** | **Parts by weight** | **Specification** |
|---|---|---|
| Polyester resin with high acid value and low viscosity | 300 | TM5013 from Zhejiang Chuanhua Tiansong |
| GMA acrylic acid resin | 665 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Total | 1000 | / |

**Embodiment 7:** A smooth powder coating composition, comprises the raw material as shown in the following table 7:

**Table 7 Formulation of the smooth powder coating composition in embodiment 7**

| **Raw material** | **Parts by weight** | **Specification** |
|---|---|---|
| Polyester resin with high acid value and low viscosity | 200 | TM5013 from Zhejiang Chuanhua Tiansong |
| GMA acrylic acid resin | 565 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Total | 1000 | / |

**Embodiment 8:** A smooth powder coating composition, comprises the raw material as shown in the following table 8:

**Table 8 Formulation of the smooth powder coating composition in embodiment 8**

| **Raw material** | **Parts by weight** | **Specification** |
|---|---|---|
| Polyester resin with high acid value and low viscosity | 600 | TM5013 from Zhejiang Chuanhua Tiansong |
| GMA acrylic acid resin | 400 | GMA1618 from Ningbo Nanhai Chemical |
| Flatting agent | 0 | / |
| Defoaminutesg agent | 0 | / |
| Dispersing agent | 0 | / |
| Degassing agent | 0 | / |
| Total | 1000 | / |

**Embodiment 9:** A smooth powder coating composition, comprises the raw material as shown in the following table 9:

**Table 9 Formulation of the smooth powder coating composition in embodiment 9**

| **Raw material** | **Parts by weight** | **Specification** |
|---|---|---|
| Polyester resin with high acid value and low viscosity | 550 | TM5013 from Zhejiang Chuanhua Tiansong |
| GMA acrylic acid resin | 315 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Fillers | 100 | Aluminutesum hydroxide |
| Total | 1000 | / |

**Embodiment 10:** A smooth powder coating composition, comprises the raw material as shown in the following table 10:

**Table 10 Formulation of the smooth powder coating composition in embodiment 10**

| **Raw material** | **Parts by weight** | **Specification** |
|---|---|---|
| Polyester resin with high acid value and low viscosity | 600 | TM5013 from Zhejiang Chuanhua Tiansong |
| GMA acrylic acid resin | 370 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 0 | / |
| Total | 1000 | / |

**Embodiment 11:** A smooth powder coating composition, comprises the raw material as shown in the following table 11:

**Table 11 Formulation of the smooth powder coating composition in embodiment 11**

| **Raw material** | **Parts by weight** | **Specification** |
|---|---|---|
| Polyester resin with high acid value and low viscosity | 600 | TM5013 from Zhejiang Chuanhua Tiansong |
| GMA acrylic acid resin | 370 | GMA1528 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 0 | / |
| Total | 1000 | / |

**Embodiment 12:** A smooth powder coating composition, comprises the raw material as shown in the following table 12:

**Table 12 Formulation of the smooth powder coating composition in embodiment 12**

| **Raw material** | **Parts by weight** | **Specification** |
|---|---|---|
| Polyester resin with high acid value and low viscosity | 600 | TM5013 from Zhejiang Chuanhua Tiansong |
| GMA acrylic acid resin | 270 | GMA1528 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Catalyst | 5 | Using imidazole type of curing accelerators publicly sold in the market are used |
| Pigments and/or Fillers | 95 | Ti0₂ |
| Total | 1000 | / |

**Comparative Example 1:** This comparative example 1 comprises the raw material as shown in the following table 13:

**Table 13 Formulation of comparative example 1**

| **Raw material** | **Parts by weight** | **Specification** |
|---|---|---|
| Polyester resin with medium acid value | 600 | Crylcoat 2671-3 from ALLNEX with acid value of 40-50mgKOH/g |
| GMA acrylic acid resin | 365 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | GMA1618 from Ningbo Nanhai Chemical |
| Total | 1000 | / |

**Comparative Example 2:** This comparative example 2 comprises the raw material as shown in the following table 14:

**Table 14 Formulation of comparative example 2**

| **Raw material** | **Parts by weight** | **Specification** |
|---|---|---|
| Polyester resin with high viscosity | 600 | The viscosity range of the polyester resin is from 2200 to 2800 mPa.s at 200 °C |
| GMA acrylic acid resin | 365 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | GMA1618 from Ningbo Nanhai Chemical |
| Total | 1000 | / |

**Comparative Example 3:** This comparative example 3 comprises the raw material as shown in the following table 15:

**Table 15 Formulation of comparative example 3**

| **Raw material** | **Parts by weight** | **Specification** |
|---|---|---|
| Polyester resin with high acid value and | 865 | TM5013 from Zhejiang Chuanhua Tiansong |
| low viscosity | | |
| GMA acrylic acid resin | 100 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Total | 1000 | / |

**Comparative Example 4:** This comparative example 1 comprises the raw material as shown in the following table 16:

**Table 16 Formulation of comparative example 4**

| **Raw material** | **Parts by weight** | **Specification** |
|---|---|---|
| Polyester resin with high acid value and low viscosity | 100 | TM5013 from Zhejiang Chuanhua Tiansong |
| GMA acrylic acid resin | 865 | GMA1618 from Ningbo Nanhai Chemical |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Total | 1000 | / |

**Comparative Example 5:** This comparative example 5 comprises the raw material as shown in the following table 17:

**Table 17 Formulation of comparative example 5**

| **Raw material** | **Parts by weight** | **Specification** | |
|---|---|---|---|
| Polyester resin with high acid value and low viscosity | 865 | | SJ3B from Shenjian |
| GMA acrylic acid resin | 100 | GMA1618 from Ningbo Nanhai Chemical | |
| Flatting agent | 10 | RESIFLOW P-64F from ESTRON | |
| Defoaminutesg agent | 10 | POWDERMATE 550DG | |
| Dispersing agent | 10 | BYK-3951P | |
| Degassing agent | 5 | OXYMELT A4 from Estron | |
| Total | 1000 | / | |

**Comparative Example 6:** This comparative example 6 comprises the raw material as shown in the following table 18:

**Table 18 Formulation of comparative example 6**

| **Raw material** | **Parts by weight** | **Specification** |
|---|---|---|
| Polyester resin with high acid value and low viscosity | 865 | TM5013 from Zhejiang Chuanhua Tiansong |
| GMA acrylic acid resin | 100 | T-700 from Zhong Tian |
| Flatting agent | 10 | RESIFLOW P-64F from ESTRON |
| Defoaminutesg agent | 10 | POWDERMATE 550DG |
| Dispersing agent | 10 | BYK-3951P |
| Degassing agent | 5 | OXYMELT A4 from Estron |
| Total | 1000 | / |

It should be noted that The TM5013 from Zhejiang ChuanHua Tiansong involved in the embodiments has an acid value of 75-85 mgKOH/g, a softening point temperature of 90-110°C, a glass transition temperature of 48-54°C and a viscosity at 200°C of 500-2000 mPa.s; The Crylcoat 2671-3 from Allnex involved in the embodiments has an acid value of 45 - 51 mgKOH/g, a glass transition temperature of about 58°C, and a viscosity at 200°C of 4300 - 7300 mPa.s;The SJ3B from Shenjian involved in the embodiments has an acid value of 68-75 mgKOH/g, a softening point temperature of 105-115°C, a glass transition temperature of about 53°C, and a viscosity at 200°C of 3500-5000 mPa.s; The GMA1618 from Ningbo Nanhai Chemical involved in the embodiments has an epoxy equivalent of 400-430 g/eq and a softening point temperature of 92-97°C; The GMA resin T-700 from Zhongtian involved in the embodiments has an epoxy equivalent of 710-740 g/eq, and a softening point temperature of 120-130°C .

In this application, the powder coating composition are obtained by the same weighing, premixing, melt extrusion, grinding, cyclone separation and other processes (well-known process preparation techniques) according to formulation of the above embodiments 1-12 and comparative examples 1-6 respectively.

Firstly, prepare the powder coating composition for the embodiment 1, and the gelation time was tested at 135°C,and its gelation time was 160 seconds; selected MDF board as the substrate, respectively set three curing conditions: curing 10 minutes at 120 °C with infrared heating, curing 7 minutes at 130 °C with infrared heating, curing 5 minutes at 135 °C with infrared heating, to obtain smooth curing coating on the MDF board respectively, and the performance test results were compared as follows Table 19.

**Table 19 Comparison of curing coating performance tests with different curing conditions**

| | **Curing 10 minutes at 120°C with infrared heating** | **Curing 7 minutes at 130°C with infrared heating** | **Curing 5 minutes at 135°C with infrared heating** |
|---|---|---|---|
| PCI flow level | 7 | 7 | 8 |
| Cross cut | 0 level | 0 level | 0 level |
| Impact (20inchi/bs) | Pass | Pass | Pass |
| Bend | 5 mm | 5 mm | 5 mm |
| Cupping | 5 mm | 5 mm | 5 mm |
| MEK testing | Pass | Pass | Pass |
| Dry heating | Meet R2 requirements | Meet R2 requirements | Meet R2 requirements |
| Humid heating | Meet P1 requirements | Meet P1 requirements | Meet P1 requirements |
| Water resistance | Meet P1 requirements | Meet P1 requirements | Meet P1 requirements |
| Alcohol resistance (48%) | Meet P1 requirements | Meet P1 requirements | Meet P1 requirements |
| Coffee Resistance | Meet P1 requirements | Meet P1 requirements | Meet P1 requirements |
| Liquid Waxes | Meet P1 requirements | Meet P1 requirements | Meet P1 requirements |

As shown in above Table 19, the results show that the curing coating film has good surface resistance as well as smooth effect under curing conditions of 120°C-135°C and curing time of 5-15 minutes in the infrared heating mode, with better smooth effect at 135°C for 5 minutes. Of course, hot air circulation curing condition can also be selected, which can achieve similar technical results.

Secondly, using the powder coating composition prepared in the embodiment 1 and selected MDF board, solid wood board and polymer plastic board as substrates respectively, to be cured at 135 °C with infrared heating for curing 5 minutes ,to obtain curing coating on the substrate respectively, and the performance test results were compared as follows Table 20.

**Table 20 Comparison of curing coating performance tests with different substrates**

| | **MDF board** | **Solid wood board** | **Polymer plastic board** |
|---|---|---|---|
| PCI flow level | 8 | 7 | 8 |
| Cross cut | 0 level | 0 level | 0 level |
| Impact (20inchi/bs) | Pass | Pass | Pass |
| Bend | 5 mm | 5 mm | 5 mm |
| Cupping | 5 mm | 5 mm | 5 mm |
| MEK testing | Pass | Pass | Pass |
| Dry heating | Meet R2 requirements | Meet R2 requirements | Meet R2 requirements |
| Humid heating | Meet P1 requirements | Meet P1 requirements | Meet P1 requirements |
| Water resistance | Meet P1 requirements | Meet P1 requirements | Meet P1 requirements |
| Alcohol resistance (48%) | Meet P1 requirements | Meet P1 requirements | Meet P1 requirements |
| Coffee Resistance | Meet P1 requirements | Meet P1 requirements | Meet P1 requirements |
| Liquid Waxes | Meet P1 requirements | Meet P1 requirements | Meet P1 requirements |

As shown in above Table 20, the smooth powder coating compositions provided in this embodiment can all be applied as smooth coating products for MDF, solid wood panels and polymeric plastic panels, which can achieve excellent smooth coating results.

Thirdly, finally using the powder coating compositions prepared in embodiments 1-12 and comparative examples 1-6, selected the same specifications of MDF as the substrate,to be cured 135 °C with infrared heating for 5 minutes, to obtain a smooth coating respectively, the performance test results are compared as follows Table 21.

**Table 21 Comparison of performance tests for the embodiments and the comparative examples**

| | **Embodiments 1-12** | **Comparative examples 1 & 6** | **Comparative examples 2 & 5** | **Comparative example 3** | **Comparative example 4** |
|---|---|---|---|---|---|
| PCI flow level | 6-8 | 4-5 | 4-5 | 4-5 | 4-5 |
| Cross cut | 0 level | 3 level | 3 level | 1 level | 0 level |
| Impact (20inchi/bs) | Pass | Pass | Pass | Fail | Fail |
| Bend | 5 mm | 10 mm | 8 mm | 7 mm | 7 mm |
| Cupping | 5 mm | 3 mm | 3 mm | 3 mm | 3 mm |
| MEKtesting | Pass | Fail | Fail | Pass | Fail |
| Dry heating | Meet R2 requirements | Don't meet R2 requirements | Don't meet R2 requirements | Don't meet R2 requirements | Meet R2 requirements |
| Humid heating | Meet P1 requirements | Don't meet P1 requirements | Don't meet P1 requirements | Don't meet P1 requirements | Meet P1 requirements |
| Water resistance | Meet P1 requirements | Don't meet P1 requirements | Don't meet P1 requirements | Meet P1 requirements | Meet P1 requirements |
| Alcohol resistance (48%) | Meet P1 requirements | Don't meet P1 requirements | Don't meet P1 requirements | Don't meet P1 requirements | Don't meet P1 requirements |
| Coffee Resistance | Meet P1 requirements | Meet P1 requirements | Meet P1 requirements | Meet P1 requirements | Meet P1 requirements |
| Liquid Waxes | Meet P1 requirements | Meet P1 requirements | Don't meet P1 requirements | Don't meet P1 requirements | Meet P1 requirements |

After comparison tests, it is found that the smooth powder coating composition provided in this Examples 1-12 have good adhesion with the MDF substrate; at the same time, it's achieved rapid curing speed under low temperature conditions, which not only meet the basic performance of powder coatings for coating protection, but also effectively avoid the problem of serious shrinkage of the curing coating film and deformation and cracking of the plate caused by rapid evaporation of water from the MDF board, and obtain a smooth curing coating film with PCI flow level of not less than 6. Further, in the Examples 1-12 of this application, Examples 1, 2, 3, 9, 10 and 11 have better PCI flow level performance, while Examples 4 and 8 have lower PCI flow level performance, and Examples 5, 6, 7 and12 have relatively worse PCI flow level performance.

In particular, it should be noted that the performance test data for the curing coating involved in this embodiment are based on the test criteria described in Table 22 below.

**Table 22 Test items and its test standards**

| **Test items** | **Test standards** |
|---|---|
| Gel-time | ISO 8130-6:1992 |
| Cross cut | ISO 2409-2013 |
| Impact | ISO 6272-1-2011, 2-2011 |
| Bend | ISO 1519-2011 |
| Cupping | ISO 1520-2006 |
| MEKtesting | GB/T 23989-2009 |
| Dry heating | BS EN 12722-2009 |
| Humid heating | BS EN 12721-2009 |
| Water resistance | BS EN 12720-2009 |
| Alcohol resistance (48%) | BS EN 12720-2009 |
| Coffee Resistance | BS EN 12720-2009 |
| Liquid Waxes | BS EN 12720-2009 |

It should be noted that the technical person in the field can also apply the smooth powder coating composition proposed in this application to other materials substrate for coating protection, which can obtain similar smmoth coating effect, and this application will not be specifically expanded to explain.

It is clear to a person skilled in the art that the present invention is not limited to the details about the foregoing example embodiments, and that the present invention can be implemented in other specific forms without departing from the spirit or essential features of the present invention. Therefore, the embodiments should be considered in all respects as examples and non-limiting, and the scope of the present invention should be defined by the appended claims instead of the foregoing description. Therefore, all changes falling within the meaning and range of equivalent elements of the claims shall be included in the present invention.

In addition, it should be understood that, although this specification has been described with reference to embodiments, not every embodiment includes only one independent technical solution, and such description of this specification is by way of clarity only. A person skilled in the art should take this specification as a whole, and the technical solutions of the embodiments may be combined as appropriate to obtain other embodiments that can be understood by a person skilled in the art.

## Claims

1. A smooth powder coating composition, **characterized in that** it includes at least a high acid value polyester resin and an epoxy-functional acrylic resin for having crosslink curing reaction with the high acid value polyester resin, wherein the viscosity range of the high acid value polyester resin is from 500 to 2000 mPa.s at 200 °C and its acid value is not less than 65 mgKOH/g.

2. The smooth powder coating composition said in claim 1, **characterized in that** the epoxy-functional acrylic resin is a GMA acrylic resin.

3. The smooth powder coating composition said in claim 1, **characterized in that** the acid value of the high acid value polyester resin is from 70-90mgKOH/g.

4. The smooth powder coating composition said in claim 1, **characterized in that** the viscosity of the epoxy-functional acrylic resin is not higher than 2000 mPa.s at 200°C.

5. The smooth powder coating composition said in claim 1, **characterized in that** the epoxy equivalent weight (EEW) of the epoxy-functional acrylic acid resin is not higher than 600 g/eq.

6. The smooth powder coating composition said in claim 1, **characterized in that** the weight ratio between the high acid value polyester resin and the epoxy-functional acrylic resin is 6:1-1:6.

7. The smooth powder coating composition said in claim 1, **characterized in that** it includes 0.2-2wt% of a flatting agent, wherein preferably the flatting agent includes a carboxyl functional acrylic polymer, which preferably is provided for as adsorbate on a silica-based carrier.

8. The smooth powder coating composition said in claim 1, **characterized in that** it includes 0.2-2wt% of a defoaminutesg agent, wherein preferably the defoaminutesg agent includes an amide modified phenol surfactant.

9. The smooth powder coating composition said in claim 1, **characterized in that** it includes 0.2-2wt% of a dispersing agent, wherein preferably the dispersing agent includes a high molecular-weight copolymer with pigment-affine groups, which preferably is provided for as adsorbate on a silica-based carrier.

10. A smooth coating obtained by spraying the smooth powder coating composition according to anyone of claims 1-9 onto a substrate and following curing by heat.

11. The smooth coating said in claim 10, **characterized in that** the substrate is a wood-based material or a polymeric material, wherein the curing temperature is not higher than 140°C and the curing time is not more than 10minutes.
